# EUROPÄISCHE PATENTSCHRIFT

(11) **EP 0 504 719 B1**
(45) Veröffentlichungstag und Bekanntmachung des Hinweises auf die Patenterteilung: **18.10.1995**
(21) Anmeldenummer: 92104135.6
(22) Anmeldetag: 11.03.1992
(51) Int. Cl.: F01N 3/28, F01N 3/02

(54) **Abgasfilter und/oder Katalysator**
Exhaust filter and/or catalytic converter
Filtre pour gaz d'échappement et/ou convertisseur catalytique

(30) Priorität: 21.03.1991 DE 4109227
(43) Veröffentlichungstag der Anmeldung: 23.09.1992
(73) Patentinhaber: Schwäbische Hüttenwerke Gesellschaft mit beschränkter Haftung, D-73414 Aalen (DE)
(72) Erfinder: Zirkel, Herbert, W-7080 Aalen-Wasseralfingen (DE)
(74) Vertreter: Lorenz, Werner, Dipl.-Ing.

(56) Entgegenhaltungen:
- EP-A- 0 358 919
- DE-A- 3 713 964
- DE-A- 3 818 281
- US-A- 4 329 844
- US-A- 4 848 513

## Beschreibung

Die Erfindung betrifft einen Abgasfilter und/oder Katalysator zur Beseitigung von schädlichen Bestandteilen aus dem Abgas eines Verbrennungsmotores, mit einem Zulauf zu einem Filter- bzw. Katalysatorkörper aus metallischen Werkstoffen, die aus formgepreßten Drähten oder Fasern als Gewirr, Geflecht, Gewirk, Gestrick oder Gewebe oder in Pulver-, Korn- oder Spanform einen von Hohlräumen durchsetzten Körper bilden, durch den das Abgas hindurchgeleitet wird, und mit einem Ableitungskanal für das durch den Filter- bzw. Katalysatorkörper gereinigte Abgas.

Filter oder Katalysatoren dieser Art sind z.B. aus der DE-OS 38 18 281 bekannt, wobei der Filterkörper aus einer Vielzahl von formgepreßten hochtemperaturbeständigen Sinterteilen aus Stahl besteht, dem zur Erzielung von katalytischen Wirkungen katalytisch wirkende Materialien zugesetzt sind. Der Filterkörper ist so ausgebildet, daß eine Vielzahl von Einlaß- und Auslaßkanälen gebildet wird, wobei das zu reinigende Abgas durch die dazwischenliegenden Wände hindurchtreten muß. Dabei kommt es zu der gewünschten Abgasreinigung, insbesondere zur Beseitung von Ruß und rußähnlichen Stoffen.

Aus der DE-OS 39 01 609 ist ebenfalls ein aus Sintermaterial gebildeter Abgasfilter bekannt, der aus einem Band mit Abstandhaltern hergestellt und spiralförmig gewickelt ist. Durch Trennwände werden dabei ebenfalls Eingangs- und Ausgangskanäle mit dazwischen liegenden Reaktionswänden gebildet.

In der DE-OS 39 08 581 ist ein Verfahren zur Herstellung eines Filter- oder Katalysatorkörpers beschrieben, der aus mehrlagigen Geweben oder Gestricken gebildet ist, die zusammengesintert sind, wobei auf die einzelnen Lagen und/oder deren Bestandteile pulverförmige, körnige oder spanförmige Partikel aufgesintert sind.

Ein derartiges Gewebe, Geflecht, Gestrick oder Gewirk kann auch durch Verschweißen oder Verlöten oder auch in Kombination mit einem Sintervorgang zur Bildung eines Filter- oder Katalysatorkörpers hergestellt werden.

Beim Betrieb eines Filters oder Katalysators der vorstehenden Art ist eine möglichst hohe und gleichmäßige Temperatur des Körpers wünschenswert, weil diese den Ablauf des angestrebten chemischen Prozesses, wie z.B. Abbrennen des Rußes bei Dieselmotoren und Umwandlung von anderen Abgasbestandteilen in weniger schädliche Bestandteile, fördert und beschleunigt. Gleichzeitig sollen jedoch überhöhte Temperaturen vermieden werden, um nicht eventuell katalytisch wirkende Bestandteile zu schädigen.

Ein großes Problem liegt jedoch dabei darin, daß die Betriebsverhältnisse des Abgaserzeugers, d.h. des Verbrennungsmotores z.B. aufgrund des Fahrverhaltens des angetriebenen Fahrzeuges erheblich schwanken können, wodurch das Abgas hohe Temperaturunterschiede besitzt. Die Schwankungsbreite kann von 50° C (Schubbetrieb eines Lkw-Motores) bis 8-900° C (Vollastbetrieb eines Pkw-Motores) liegen.

Zu beachten ist auch, daß die Temperatur des Filters oder Katalysators davon abhängig ist, wo er sich befindet. So liegen z.B. deutlich unterschiedliche Verhältnisse vor, wenn sich der Filter bzw. Katalysator im Abgasstrom unmittelbar hinter dem Motor oder von diesem weiter entfernt, z.B. unter dem Boden des Fahrzeuges in der Nähe oder verbunden mit dem Schalldämpfer, befindet.

Aus der DE-OS 37 13 964 ist eine Anordnung eines Katalysator-Gehäuses in der Abgasleitung von Fahrzeug-Brennkraftmaschinen bekannt, bei der sich die Eintrittsöffnung in das Gehäuse des Katalysators auf der der Brennkraftmaschine abgewandten Gehäuseseite befindet. Dadurch, daß die zur Eintrittsöffnung führende Abgasleitung durch das Katalysator-Gehäuse geführt ist, kann eine größere Rohrlänge zwischen der Brennkraftmaschine und der Eintrittsöffnung realisiert werden, ohne dadurch erhöhte Wärmeverluste in Kauf nehmen zu müssen.

Die genannte Druckschrift betrifft jedoch einen Katalysator, der vollständig anders aufgebaut ist als die gemäß dem Oberbegriff des Anspruchs 1 ausgeführten Katalysatoren.

Um wenigstens eine gewisse Vergleichmäßigung der Temperatur des dem Filter bzw. Katalysator zugeführten Abgases bzw. eine Temperaturerhöhung im Anfahr- oder Schubbetrieb und damit eine schnellere Wirksamkeit zu erreichen, sind Zwei Arten von Aufheizungen des Filters bzw. Katalysators bekannt. Zum einen heizt der Abgasstrom beim Durchströmen des Filter- bzw. Katalysatorkörpers diesen selbst auf, wobei versucht wird, durch eine geeignete Gestaltung des Filter- bzw. Katalysatorkörpers eine schnelle Aufheizung zu erreichen. Zum anderen werden zusätzliche Heizeinrichtungen, wie z.B. Brenner, Glühkerzen u.dgl., vorgesehen, die entweder dauernd oder nur bei Bedarf zugeschaltet werden.

Das zuerst genannnte Verfahren hat sich bisher als unzulänglich erwiesen, das letztgenannte erfordert erhebliche zusätzliche mechanische, elektrische und sonstige Bauteile.

Es wurde auch bereits versucht, bei Filtern für die Abgase von Dieselmotore den Zündzeitpunkt für die zu verbrennenden Rußpartikel durch Additive zum Dieselöl herabzusetzen. Dies erzeugt jedoch zwangsläufig wiederum Probleme, weil die Additive entweder zusätzlich herausgefiltert werden müssen oder in schädlicher Weise in die Atmosphäre austreten.

Der vorliegenden Erfindung liegt daher die Aufgabe zugrunde, die Wirksamkeit eines Filters oder Katalysators zu verbessern, insbesondere die Temperaturverhältnisse für diesen.

Erfindungsgemäß wird diese Aufgabe dadurch gelöst, daß der Filter- bzw. Katalysatorkörper zusätzlich als Wärmetauscherkörper für das zu reinigende Abgas ausgebildet ist, wobei in dem Zulauf eine Regel- oder Steuereinrichtung angeordnet ist, von der aus ein Abzweigkanal zu einem Wärmeaustausch und eine Direktleitung zu dem Filter- bzw. Katalysatorkörper führt.

In vorteilhafter Weise wird nunmehr eine deutlich bessere Ausnutzung der im Abgastrom enthaltenen Wärme herbeigeführt, und zwar ohne zusätzliche Einbauten oder Ausgestaltungen. Dies ist darauf zurückzuführen, daß der Erfinder erkannt hat, daß sich die eingangs erwähnten Materialien auch sehr gut als Wärmetauscher eignen. Sie besitzen nämlich eine große Oberfläche zur Wärmeaufnahme und zur Wärmeabgabe, und zwar insbesondere aufgrund ihrer metallischen Grundstruktur und der Verbindung zwischen den metallischen Bestandteilen. Auf diese Weise wird in einem hohen Maße eine Wärmeleitfähigkeit erreicht, die zu einem Wärmeaustausch des heißen, in den Filter bzw. Katalysatorkörper einströmenden Abgasstromes verwendet wird.

Durch die Regel- oder Steuereinrichtung läßt sich in Abhängigkeit vom Betriebszustand und der herrschenden Temperatur der Abgasstrom entsprechend steuern oder regeln. So ist z.B. ein Direktbetrieb des Filter- bzw. Katalysatorkörpers in üblicher Weise möglich, eine vorherige Umleitung und Durchleitung des Abgasstromes durch die Wärmetauscherrohre bzw. -kanäle oder auch ein Mischbetrieb.

Ein weiterer Vorteil des erfindungsgemäßen Abgasfilters bzw. Katalysators liegt darin, daß man durch eine geeignete Steuerung des Abgasstromes im Bedarfsfalle auch bei Überlastbetrieb Überhitzungen vermeiden kann.

Eines der Hauptvorteile des erfindungsgemäßen Abgasfilters bzw. Katalysators liegt darin, daß man bei einem Kaltstart oder unter stark kühlenden Betriebsverhältnissen die notwendige Betriebstemperatur des Filters bzw. Katalysators sehr rasch herbeiführen bzw. ein Absinken während des Betriebes, z.B. im Schubbetrieb, vermeiden und die erforderliche Betriebstemperatur entsprechend halten kann.

Die Ausbildung des Filter- bzw. Katalysatorkörpers zusätzlich als Wärmetauscherkörper kann auf vielfältige Weise erfolgen. In einfacher Weise kann vorgesehen sein, daß der Filter- bzw. Katalysatorkörper mit von dem Abgas durchströmten Wärmetauscherrohren oder -kanälen durchsetzt ist, in die das Abgas vor seinem Eintritt in den eigentlichen Filter- bzw. Katalysatorkörper einleitbar ist.

Durch diese Ausgestaltung werden bei einem Kaltstart und/oder bei einem unterkühlten Betriebszustand die Abgase zuerst durch die Wärmetauscherrohre bzw. -kanäle geschickt, bevor es zur Abgasreinigung kommt. Auf diese Weise erfolgt eine rasche Aufheizung des Körpers und damit eine schnellere Wirksamkeit.

Durch die Regel- oder Steuereinrichtung läßt sich in Abhängigkeit vom Betriebszustand und der herrschenden Temperatur der Abgasstrom entsprechend steuern oder regeln. So ist z.B. ein Direktbetrieb des Filter- bzw. Katalysatorkörpers in üblicher Weise möglich, eine vorherige Umleitung und Durchleitung des Abgasstromes durch die Wärmetauscherrohre bzw. -kanäle oder auch ein Mischbetrieb.

Ein weiterer Vorteil des erfindungsgemäßen Abgasfilters bzw. Katalysators liegt darin, daß man durch eine geeignete Steuerung des Abgasstromes im Bedarfsfalle auch bei Überlastbetrieb Überhitzungen vermeiden kann.

Nach dem Durchgang des Abgasstromes durch die Wärmetauscherrohre bzw. Kanäle kann das Abgas wieder in einen Zulauf zu dem Filter- oder Katalysatorkörper oder in die zu dem Filter- bzw. Katalysatorkörper führende Direktleitung zurückgeführt werden.

In einer vorteilhaften Ausgestaltung der Erfindung kann vorgesehen sein, daß die Wärmetauscherrohre oder -kanäle mit einzeln und/oder gemeinsam betätigbaren Absperrklappen versehen sind.

Durch Absperrklappen läßt sich eine noch bessere Temperatursteuerung erreichen, denn in Abhängigkeit von der vorhandenen Temperatur können Wärmetauscherrohre bzw. -kanäle entsprechend ganz oder teilweise abgesperrt oder zugeschaltet werden.

Der Filter- bzw. Katalysatorkörper kann von den Wärmetauscherrohren bzw. -kanälen quer oder entgegen der durch den Filter- bzw. Katalysatorkörper gerichteten Abgasstromrichtung durchzogen sein.

Im allgemeinen wird man dabei eine Gegenstromrichtung bevorzugen, da auf diese Weise der beste Wärmeübergang bzw. -austausch gegeben ist.

In Abhängigkeit von der Größe des Filter- bzw. Katalysatorkörpers und dem Durchmesser der Wärmetauscherrohre bzw. -kanäle wird man im allgemeinen eine Vielzahl von neben- und übereinander angeordneten Wärmetauscherrohren bzw. -kanälen vorsehen.

Die Wärmetauscherrohre bzw. -kanäle können direkt in den Filter- bzw. Katalysatorkörper eingeformt sein, wobei lediglich dafür zu sorgen ist, daß eine Abgasdichtheit gegeben ist, oder es werden separate Rohre oder Kanäle durch den Filter- bzw. Katalysatorkörper hindurchgeführt, die dann fest mit dem Körper verbunden werden.

Eine sehr vorteilhafte und nicht naheliegende Weiterbildung der Erfindung kann darin bestehen, daß in den Zu- und Ableitungen zu den durch den Filter- bzw. Katalysatorkörper führenden Wärmetauscherrohren oder -kanälen ein oder mehrere Wärmespeicher angeordnet sind.

Durch die Kombination mit einem externen Wärmespeicher wird ein noch höherer Wirkungsgrad erreicht. Verwendet man dabei zur Aufheizung bzw. Speicherung der Wärme in dem Wärmespeicher den Abgasstrom selbst, so ist der zusätzliche Aufwand für den Wärmespeicher entsprechend niedriger. Als Wärmespeicher können bekannte Bauarten verwendet werden, die z.B. auf Salzbasis aufgebaut sind. Beim Durchströmen des Abgases kann der Wärmespeicher aus diesem Wärme aufnehmen und sie dann, wenn das Abgas kühl ist, z.B. beim Kaltstart des Motores und im Schubbetrieb, entsprechend vergleichmäßigend wieder an den kälteren Abgasstrom abgeben.

Die Anordnung des Wärmespeichers kann dabei an beliebiger Stelle in den Zu- oder Ableitungen erfolgen.

Von Vorteil ist es, wenn in dem Zulauf vor der Regel- oder Steuereinrichtung ein Wärmefühler angeordnet ist, durch den temperaturabhängig die Stellung der Regel- oder Steuereinrichtung einstellbar ist.

Nachfolgend sind zwei Ausführungsbeispiele der Erfindung anhand der Zeichnung prinzipmäßig beschrieben.

Es zeigt:
- Fig. 1: einen Abgasfilter bzw. Katalysator, mit Wärmetauscherrohren in Querstromrichtung,
- Fig. 2: einen Abgasfilter bzw. Katalysator, mit Wärmetauscherrohren in Gegenstromrichtung.

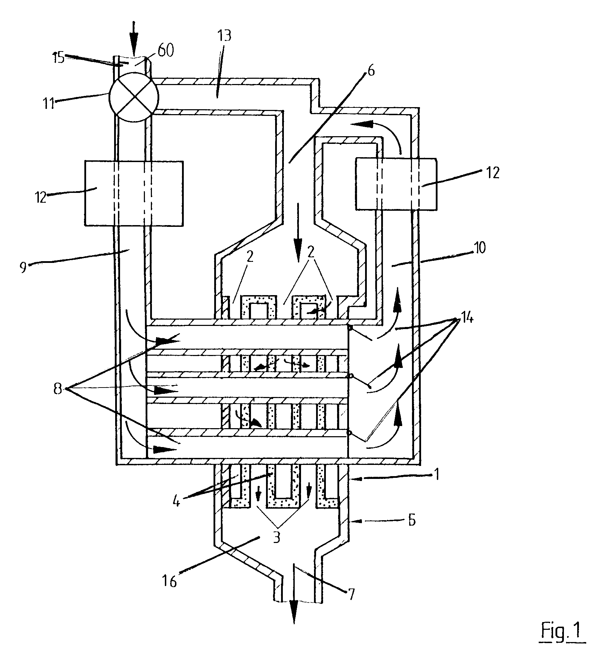

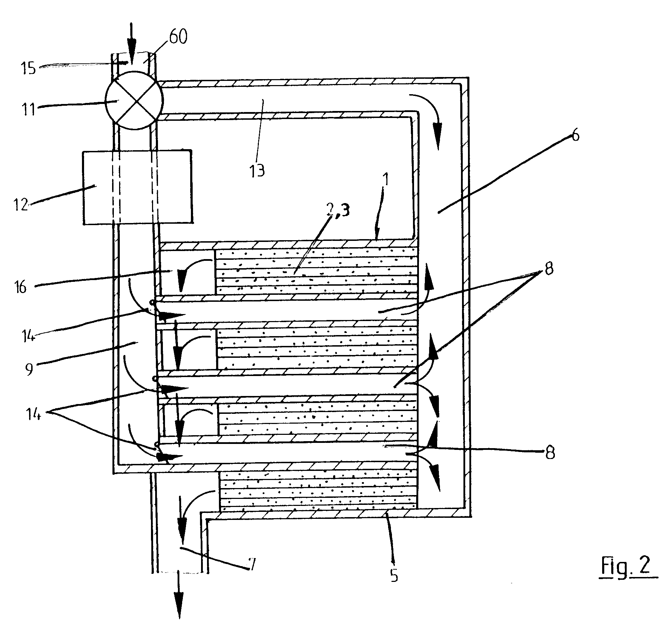

Der Abgasfilter gemäß Fig. 1 besitzt einen Filterkörper 1. Der Filterkörper 1 kann von bekannter Bauart sein, wie er z.B. in den eingangs erwähnten Patentschriften aufgeführt ist. Dargestellt ist dabei in den Fig. 1 und 2 eine Ausgestaltung eines Filterkörpers 1, wie er z.B. in der DE-OS 38 18 281 beschrieben ist, wobei mehrere Eingangskanäle 2 und Ausgangskanäle 3 vorgesehen sind, die durch Filterwände 4 voneinander getrennt sind.

Der Filterkörper 1 befindet sich in einem Gehäuse 5, in das ein Zulauf 60 mündet und aus dem auf der dem Zulauf 60 gegebenüberliegenden Seite von einer Sammelkammer 16 aus ein Ableitungskanal 7 herausführt.

Den Filterkörper 1 durchsetzen mehrere neben- und übereinander angeordnete Wärmetauscherrohre 8. Bei dem Ausführungsbeispiel sind aus Übersichtlichkeitsgründen in vergrößertem Maßstab nur drei Wärmetauscherrohre 8 dargestellt. Die Wärmetauscherrohre 8 zweigen eingangsseitig von einem Abzweigkanal 9 ab und ausgangsseitig sind sie in einer Sammelleitung 10 zusammengefaßt, die zu einem Zufuhrkanal 6 zurückgeführt ist. In dem Zufuhrkanal 6 bzw. dem Zulauf 60 befindet sich eine Regel- oder Steuereinrichtung 11. In Prinzipdarstellung ist weiterhin in dem Abzweigkanal 9 und der Sammelleitung 10 jeweils ein Wärmespeicher 12 dargestellt. Bei Nichtbedarf kann der Abgasstrom auch um die beiden Wärmespeicher 12 herumgeführt werden. Selbstverständlich ist es im Bedarfsfalle auch nicht erforderlich, zwei Wärmespeicher 12 vorzusehen. Gegebenenfalls genügt ein Wärmespeicher entweder in dem Abzweigkanal 9 oder der Sammelleitung 10.

Der erfindungsgemäße Abgasfilter bzw. Katalysator funktioniert auf folgende Weise:
Bei Kaltstart oder in einem unterkühlten Betriebszustand wird das in Pfeilrichtung in die Regel- oder Steuereinrichtung 11 einströmende Abgas über den Abzweigkanal 9 in die Wärmetauscherrohre 8 eingeleitet, von wo aus es nach einem Durchströmen durch den Filterkörper 1 diesen unter Wärmeabgabe aufheizt. Über die Sammelleitung 10 und gegebenenfalls nach Durchgang durch den Wärmespeicher 12 gelangt das Abgas in den Zufuhrkanal 6, von wo aus es in Pfeilrichtung in die Einlaßkanäle 2 einströmt und bei dem Durchgang durch die Filterwände 4 entsprechend gereinigt aus den Auslaßkanälen 3 ausströmt und dann über den Ableitungskanal 7 abströmt.

Nach Erreichen der gewünschten Temperatur schaltet die Regel- oder Steuereinrichtung 11 um, sperrt den Abzweigkanal 9 ganz oder teilweise ab und leitet das Abgas über eine Direktleitung 13 in den Zufuhrkanal 6. Auf diese Weise erfolgt in üblicher Weise eine Reinigung des Abgases beim Durchgang durch den Filterkörper 1. Sofern keine Absperrklappen vorgesehen sind, strömt zwar kurzzeitig auch Abgas in die Sammelleitung 10 und von da aus in die Wärmetauscherrohre 8 in Gegenrichtung, aber mangels Ableitmöglichkeit stellt sich hier sehr schnell ein Stauzustand ein, der zu keiner Beeinträchtigung der Abgasströmung durch den Filterkörper 1 führt.

Im Bedarfsfalle können ein- oder ausgangsseitig in den Wärmetauscherrohren 8 noch Absperrklappen 14 vorgesehen sein, durch deren Einsatz noch ein kombinierter Betrieb möglich wird. So kann z.B. in den Abzweigkanal 9 eingeführtes Abgas nur über einen Teil der Wärmetauscherrohre 8 strömen, wenn ein Teil durch Absperrklappen 14 abgesperrt ist.

Zur Regelung des Abgasstromes kann im Zulauf 60 vor der Regel- oder Steuereinrichtung 11 auch ein Wärmefühler 15 vorgesehen sein. Als Wärmefühler kann z.B. eine Bi-Metallfeder oder ein "Memory"-Material verwendet werden, dessen Stellung, die temperaturabhängig ist, zur Regelung der Regel- oder Steuereinrichtung 11 verwendet wird.

In der Fig. 2 ist eine andere Ausgestaltung eines Abgasfilters dargestellt. Der Filterkörper 1 kann dabei in gleicher Weise wie der in der Fig. 1 mit Einlaßkanälen 2 und Auslaßkanälen 3 ausgebildet sein. Zur Vereinfachung ist in dieser Figur der Filterkörper 1 jedoch nur als "Block" dargestellt.

Selbstverständlich kann der Filterkörper 1 jedoch auch von einer anderen Bauart sein. Hierzu wird auf die eingangs erwähnten bekannten Filter- und Katalysatorkörper verwiesen.

Der wesentliche Unterschied dieser Ausgestaltung gegenüber der in der Fig. 1 dargestellten Form liegt darin, daß die Wärmetauscherrohre 8 derart durch den Filterkörper 1 hindurchgeführt sind, daß sich in ihnen eine Gegenströmung zu der Strömung einstellt, die das Abgas zu dessen Reinigung beim Durchströmen durch den Filterkörper 1 selbst nimmt. Hierzu sind die mit dem Abzweigkanal 9 verbundenen Wärmetauscherrohre 8 durch die Sammelkammer 16 hindurchgeführt. Von der Sammelkammer 16 geht der Ableitungskanal 7 ab.

Da der Aufbau des Abgasfilters grundsätzlich gleich ist wie der anhand der Fig. 1 beschriebene Abgasfilter, werden hierfür auch die gleichen Bezugszeichen für die gleichen Teile verwendet. Der Abgasfilter nach der Fig. 2 funktioniert auf folgende Weise:
Bei Kaltbetrieb wird der Abgasstrom von der Regel- oder Steuereinrichtung 11 in den Abzweigkanal 9 eingeleitet, wobei er noch durch einen Wärmespeicher 12 zur weiteren Aufheizung hindurchgeführt werden kann. Nach Durchgang durch die Wärmetauscherrohre 8, wobei das Abgas seine Wärme an den Filterkörper 1 abgibt, gelangt es eingangsseitig zu den Einlaßkanälen zu dem Filterkörper 1 und wird entsprechend der dargestellten Pfeilrichtung im Gegenstrom zu dem durch die Wärmetauscherrohre 8 geführten Abgasstrom durch den Filterkörper zur Abgasreinigung hindurchgeführt. Auf der Eingangsseite der Wärmetauscherrohre 8 verläßt das gereinigte Abgas den Filterkörper 1 und gelangt dabei in die Sammelkammer 16, von wo es unter Umströmung der die Sammelkammer 16 durchsetzenden Wärmetauscherrohre 8 zum Ableitungskanal 7 gelangt (siehe Pfeile in der Sammelkammer 16). Dabei ist lediglich dafür zu sorgen, daß eine Abgasdichtheit zwischen der Sammelkammer 16 und den Wärmetauscherrohren 8 besteht.

Im Normalbetrieb leitet die Regel- oder Steuereinrichtung 11 den Abgasstrom über die Direktleitung 13 auf direktem Wege zur Eingangsseite des Filterkörpers 1. In diesem Falle ist der Zufuhrkanal 6 mit der Direktleitung 13 identisch. Zwar kann das Abgas dabei auch in Gegenrichtung zu der vorstehend beschriebenen Richtung in die Wärmetauscherrohre 8 einströmen, sofern keine Absperrklappen vorgesehen sind, aber auch in diesem Falle stellt sich sehr schnell ein Stauzustand ein, der den Betrieb dann nicht stört.

Zusätzlich können ausgangsseitig oder - wie dargestellt - eingangsseitig in den Wärmetauscherrohren 8 Absperrklappen 14 vorgesehen sein, die eine Teil- oder Vollsperrung bewirken können.

## Patentansprüche

1. Abgasfilter und/oder Katalysator zur Beseitigung von schädlichen Bestandteilen aus dem Abgas eines Verbrennungsmotores, mit einem Zulauf (60) zu einem Filter- bzw. Katalysatorkörper (1) aus metallischen Werkstoffen, die aus formgepreßten Drähten oder Fasern als Gewirr, Geflecht, Gewirk, Gestrick oder Gewebe oder in Pulver-, Korn- oder Spanform einen von Hohlräumen durchsetzten Körper bilden, durch den das Abgas hindurchgeleitet wird, und mit einem Ableitungskanal (7) für das durch den Filter- bzw. Katalysatorkörper (1) gereinigte Abgas,
**dadurch gekennzeichnet,** daß
der Filter- bzw. Katalysatorkörper (1) zusätzlich als Wärmetauscherkörper für das zu reinigende Abgas ausgebildet ist, wobei in dem Zulauf (60) eine Regel- oder Steuereinrichtung (11) angeordnet ist, von der aus ein Abzweigkanal (9) zu einem Wärmeaustausch und eine Direktleitung (13) zu dem Filter- bzw. Katalysatorkörper (1) führt.

2. Abgasfilter nach Anspruch 1,
**dadurch gekennzeichnet,** daß
der Filter- bzw. Katalysatorkörper (1) mit von dem Abgas durchströmten Wärmetauscherrohren oder -kanälen (8) durchsetzt ist, in die das Abgas vor seinem Eintritt in den eigentlichen Filter- bzw. Katalysatorkörper (1) einleitbar ist.

3. Abgasfilter nach Anspruch 1 oder 2,
**dadurch gekennzeichnet,** daß
die Wärmetauscherrohre oder -kanäle (8) nach ihrem Durchgang durch den Filter- bzw. Katalysatorkörper (1) in einen Zufuhrkanal (6) zu dem Filter- oder Katalysatorkörper (1) bzw. die Direktleitung (13) münden.

4. Abgasfilter nach einem der Ansprüche 1 bis 3,
**dadurch gekennzeichnet,** daß
die Wärmetauscherrohre oder -kanäle (8) mit einzeln und/oder gemeinsam betätigbaren Absperrklappen (14) versehen sind.

5. Abgasfilter nach Anspruch 2,
**dadurch gekennzeichnet,** daß
die Wärmetauscherrohre oder -kanäle (8) den Filter- bzw. Katalysatorkörper (1) quer zur Strömungsrichtung des Abgases durchströmen.

6. Abgasfilter nach Anspruch 2,
**dadurch gekennzeichnet,** daß
die Wärmetauscherrohre oder -kanäle (8) bezüglich ihrer Strömungsrichtung entgegengesetzt zur Strömungsrichtung des Abgases durch den Filter- bzw. Katalysatorkörper (1) geführt sind.

7. Abgasfilter nach einem der Ansprüche 2 bis 6,
**dadurch gekennzeichnet,** daß
eine Vielzahl von neben- und/oder übereinander angeordneten Wärmetauscherrohren oder -kanälen (8) durch den Filter- bzw. Katalysatorkörper (1) geführt sind.

8. Abgasfilter nach einem der Ansprüche 2 bis 7,
**dadurch gekennzeichnet,** daß
daß die Wärmetauscherrohre oder -kanäle (8) direkt und abgasdicht in den Filter- bzw. Katalysatorkörper (1) eingeformt sind.

9. Abgasfilter nach einem der Ansprüche 2 bis 7,
**dadurch gekennzeichnet,** daß
die Wärmetauscherrohre oder -kanäle (8) als separate Rohre bzw. -kanäle durch den Filter- bzw. Katalysatorkörper (1) hindurchgeführt, jedoch fest mit diesem verbunden sind.

10. Abgasfilter nach einem der Ansprüche 2 bis 9,
**dadurch gekennzeichnet,** daß
in den Zu- und Ableitungen zu den durch den Filter- bzw. Katalysatorkörper (1) führenden Wärmetauscherrohren oder -kanälen (8) ein oder mehrere Wärmespeicher (12) angeordnet sind.

11. Abgasfilter nach Anspruch 10,
**dadurch gekennzeichnet,** daß
wenigstens ein Wärmespeicher (12) in dem Abzweigkanal (9) angeordnet ist.

12. Abgasfilter nach Anspruch 1,
**dadurch gekennzeichnet,** daß
in dem Zulauf (60) vor der Regel- oder Steuereinrichtung (11) ein Wärmefühler (15) angeordnet ist, durch den temperaturabhängig die Stellung der Regel- oder Steuereinrichtung (11) einstellbar ist.

## Claims

1. Exhaust filter and/or catalytic converter for removing harmful constituents from the exhaust gas of an internal combustion engine, comprising an inlet (60) to a filter or catalyst body (1) consisting of metal materials of compression moulded wires or fibres in the form of tangled, interlaced, knitted or woven fabric or in the form of powder, granules or chips forming a body penetrated by cavities through which the exhaust gas passes, and comprising a discharge channel (7) for the exhaust gas purified by the filter or catalyst body (1), characterised in that the filter or catalyst body (1) is additionally designed as a heat exchanger body for the exhaust gas to be purified, a control means (11) from which a branch channel (9) leads to a heat exchanger and a direct line (13) leads to the filter or catalyst body (1) being arranged in the inlet (60).

2. Exhaust filter according to claim 1, characterised in that the filter or catalyst body (1) is penetrated by heat exchanger tubes or channels (8) through which the exhaust gas flows and into which the exhaust gas can be introduced before it enters the actual filter or catalyst body (1).

3. Exhaust filter according to claim 1 or claim 2, characterised in that the heat exchanger tubes or channels (8) open into a supply channel (6) to the filter or catalyst body (1) or into the direct line (13) after their passage through the filter or catalyst body (1).

4. Exhaust filter according to one of claims 1 to 3, characterised in that the heat exchanger tubes or channels (8) are provided with shut-off valves (14) which can be actuated individually and/or together.

5. Exhaust filter according to claim 2, characterised in that the heat exchanger tubes or channels (8) pass through the filter or catalyst body (1) transversely to the flow direction of the exhaust gas.

6. Exhaust filter according to claim 2, characterised in that the heat exchanger tubes or channels (8) are guided through the filter or catalyst body (1) in the opposite direction to the flow direction of the exhaust gas.

7. Exhaust filter according to one of claims 2 to 6, characterised in that a plurality of heat exchanger tubes or channels (8) arranged alongside one another or one above the other are guided through the filter or catalyst body (1).

8. Exhaust filter according to one of claims 2 to 7, characterised in that the heat exchanger tubes or channels (8) are formed directly in the filter or catalyst body (1) in a gastight manner.

9. Exhaust filter according to one of claims 2 to 7, characterised in that the heat exchanger tubes or channels (8) are guided through the filter or catalyst body (1) as separate tubes or channels, but are fixedly connected thereto.

10. Exhaust filter according to one of claims 2 to 9, characterised in that one or more heat accumulators (12) are arranged in the supply and discharge lines to and from the heat exchanger tubes or channels (8) leading through the filter or catalyst body (1).

11. Exhaust filter according to claims 10, characterised in that at least one heat accumulator (12) is arranged in the branch channel (9).

12. Exhaust filter according to claim 1, characterised in that a heat detector (15) is arranged in the inlet (60) upstream of the control means (11), by means of which the position of the control means (11) can be adjusted as a function of the temperature.

## Revendications

1. Filtre à gaz d' échappement et/ou convertisseur catalytique pour éliminer des constituants nocifs des gaz d'échappement d'un moteur à combustion interne, comportant une amenée (60) conduisant à un corps filtrant ou catalytique (1) en matériaux métalliques qui, par moulage sous presse de fils ou fibres métalliques en entrelacs, treillis, tricot ou tissu, ou sous forme de poudre, de grains ou de copeaux, forment un corps poreux à travers lequel les gaz d'échappement sont conduits, et un conduit d'évacuation (7) pour les gaz épurés par le corps filtrant ou catalytique (1), **caractérisé** en ce que le corps filtrant ou catalytique (1) est agencé en outre en échangeur de chaleur pour les gaz à épurer, et en ce qu'il est prévu dans l'amenée (60) un organe de réglage ou de commande (11) à partir duquel un conduit de dérivation (9) mène à un échange de chaleur et un conduit direct (13) mène au corps filtrant ou catalytique (1).

2. Filtre selon la revendication 1, **caractérisé** en ce que le corps filtrant ou catalytique (1) est traversé par des tubes ou canaux d'échange de chaleur (8) où passent les gaz d'échappement et dans lesquels ces gaz peuvent être introduits avant d'entrer dans le corps filtrant ou catalytique (1) proprement dit.

3. Filtre selon la revendication 1 ou 2, **caractérisé** en ce que les tubes ou canaux d'échange de chaleur (8), après leur traversée du corps filtrant ou catalytique (1) débouchent dans un conduit d'admission (6) du corps filtrant ou catalytique (1) ou dans le conduit direct (13).

4. Filtre selon l'une des revendications 1 à 3, **caractérisé** en ce que les tubes ou canaux d'échange de chaleur (8) sont munis de clapets d'arrêt (14) susceptibles d'être actionnés individuellement ou ensemble.

5. Filtre selon la revendication 2, **caractérisé** en ce que les tubes ou canaux d'échange de chaleur (8) traversent le corps filtrant ou catalytique (1) perpendiculairement à la direction d' écoulement des gaz d'échappement.

6. Filtre selon la revendication 2, **caractérisé** en ce que les tubes ou canaux d'échange de chaleur (8) traversent le corps filtrant ou catalytique (1) suivant un sens d'écoulement opposé à celui des gaz d'échappement.

7. Filtre selon l'une des revendications 2 à 6, **caractérisé** en ce qu'un grand nombre de tubes ou canaux d'échange de chaleur (8) juxtaposés ou superposés traversent le corps filtrant ou catalytique (1).

8. Filtre selon l'une des revendications 2 à 7, **caractérisé** en ce que les tubes ou canaux d'échange de chaleur (8) sont formés directement et de manière étanche aux gaz dans le corps filtrant ou catalytique (1).

9. Filtre selon l'une des revendications 2 à 7, **caractérisé** en ce que les tubes ou canaux d'échange de chaleur (8) sont formés par des tubes ou canaux séparés traversant le corps filtrant ou catalytique (1) mais liés rigidement à celui-ci.

10. Filtre selon l'une des revendications 2 à 9, **caractérisé** en ce qu'un ou plusieurs accumulateurs de chaleur (12) est ou sont disposés dans les conduits allant à ou venant des tubes ou canaux d'échange de chaleur (8) qui traversent le corps filtrant ou catalytique (1).

11. Filtre selon la revendication 10, **caractérisé** en ce qu'au moins un accumulateur de chaleur (12) est disposé dans le conduit de dérivation (9).

12. Filtre selon la revendication 1, **caractérisé** en ce que l'amenée (60) comporte, en amont de l'organe de réglage et de commande (11), un capteur de température (15) au moyen duquel la position de l'organe de réglage et de commande (11) peut être ajustée en fonction de la température.
